# EUROPÄISCHE PATENTANMELDUNG

(11) **EP 1 712 130 A2**
(43) Veröffentlichungstag der Anmeldung: **18.10.2006**
(21) Anmeldenummer: 06450055.6
(22) Anmeldetag: 10.04.2006
(51) Int. Cl.: A01M 1/14

(54) **Beschichtung für Kleintierfallen**

(30) Priorität: 14.04.2005 AT 2322005
(71) Anmelder: Calantis Infochemicals GmbH, 1140 Wien (AT)
(72) Erfinder: Harand, Wolfgang, 1230 Wien (AT)
(74) Vertreter: Patentanwaltskanzlei Matschnig

(57) **Zusammenfassung**

Lipophile Zusammensetzung zur Verwendung als Beschichtung für Kleintierfallen mit einer dynamische Viskosität, gemessen bei einer Scherrate von 0,1 bis 1 s⁻¹, von weniger als 100 Pa*s über einen Temperaturbereich von 10 bis 30°C.

## Beschreibung

Die Erfindung betrifft eine lipophile Zusammensetzung zur Verwendung als Beschichtung für Kleintierfallen.

Viele Kleintiere, vor allem aus der taxonomischen Gruppe der Gliedertiere (Arthropoda), verursachen Schäden an Menschen, Tieren oder Pflanzen, entweder direkt als Parasiten oder Räuber, oder indirekt durch Übertragung von Krankheiten. Zum Schutz vor diesen Schädlingen werden oft Biozide eingesetzt, immer häufiger kommen aber auch giftfreie Methoden wie zum Beispiel Fallen zum Einsatz. Solche Fallen sind in vielfacher Ausführung bekannt, wie beispielsweise aus der WO 04/028247, US 6,112,454, WO 02/102145, US 2004/218380 oder in WO 04/071188.

Oft werden Fallen auch in Kombination mit spezifischen Lockstoffen zur Überwachung von Schädlingspopulationen eingesetzt. In solchen Fallen werden Kleintiere auf verschiedene Weise unschädlich gemacht, zum Beispiel durch elektrische Hochspannung. Eine einfache und weit verbreitete Methode sind haftende Beschichtungen, welche das Entkommen der Tiere verhindern. Fallen mit haftklebenden Beschichtungen werden zum Beispiel in WO 04/095919, WO 03/075651, JP 2003 339 293, und in der US 1998/167784 A1 beschrieben. Zu diesem Zweck kommen haftklebende Substanzen oder Substanzgemische zum Einsatz. Haftklebende Substanzen oder Substanzgemische, wie zum Beispiel Polymere nach Beschreibung in JP 1985/27 293 oder JP 1977/153 336, sind in vielfältiger Form bekannt und oft als spezielle Produkte zum Fang von Kleintieren am Markt erhältlich.

Solche marktüblichen Beschichtungen von Insektenfallen sind fest oder stark viskos und besitzen starke Adhäsionskräfte, das heißt, sie haben gute haftklebende Eigenschaften im Sinne der DIN 16921. Der Einsatz derartiger Beschichtungen in Kleintierfallen hat große Nachteile: Die Wirkung von haftklebenden Substanzen basiert auf Anpressdruck. Dieser ist naturgemäß bei kleinen Tieren mit wenig Gewicht und geringer physischer Kraft gering, die Haftwirkung ist daher ebenfalls gering.

Darüber hinaus sind diese Beschichtungen für den Fang solcher Tiere besonders schlecht geeignet, die auf ihrer Körperoberfläche Staub, Schuppen oder Haare tragen, welche sie ohne Schaden zu nehmen verlieren können. Bei solchen Tieren bleibt nur eine kleine Menge Staub, Haare oder Schuppen auf der Beschichtung haften; das Tier kann ohne Beeinträchtigung entkommen. Die größte zoologisch-taxonomische Gruppe von Tieren mit einer derart beschaffenen Körperoberfläche sind Falter (Lepidoptera), aber auch in anderen Gruppen sind solche Schädlinge anzutreffen (z.B. die mit Wachspulver bedeckte weiße Fliege).

Die Aufgabe der vorliegenden Erfindung ist es daher, eine Beschichtung zum Fangen von Kleintieren zur Verfügung zu stellen, die die oben genannten Nachteile beseitigt.

Diese Aufgabe wird mit einer lipophilen Zusammensetzung der eingangs genannten Art erfindungsgemäß dadurch gelöst, dass die Beschichtung eine dynamische Viskosität, gemessen bei einer Scherrate von 0,1 bis 1 s⁻¹, von weniger als 100 Pa*s über einen Temperaturbereich von 10 bis 30 C, aufweist.

Es hat sich überraschenderweise herausgestellt, dass an lipophilen Beschichtungen mit geringen bis gar keinen haftklebenden Eigenschaften, also geringer Adhäsion und geringer Viskosität, Kleintiere wesentlich besser haften als an Beschichtungen mit guten haftklebenden Eigenschaften, also mit hoher Adhäsion und hoher Kohäsion. Es hat sich des Weiteren herausgestellt, dass die Benetzung der Oberfläche der Tiere durch die Beschichtung ein wesentlicher Grund für diese Tatsache ist.

Für eine gute Benetzung ist notwendig, dass die Oberflächenenergie der Beschichtung kleiner als die der zu benetzenden Oberfläche ist, und dass zudem die Adhäsionskräfte zwischen der Flüssigkeit und der zu benetzenden Oberfläche größer sind als die Kohäsionskräfte innerhalb der Flüssigkeit.

Praktisch alle lebenden Organismen, also auch Kleintiere, haben eine wachsartige, lipophile äußere Schutzschicht, die unter Anderem das Austrocknen über die Körperoberfläche verhindert. Lipophile Stoffe haben im Allgemeinen schwächere intermolekulare Wechselwirkungen als hydrophile und daher eine niedrigere Oberflächenenergie. Beispielsweise beträgt die Oberflächenenergie von Wasser ca. 73 mJ/m², die von natürlichem Carnaubawachs hingegen nur ca. 38 mJ/m². Um für die wachsartige, lipophile Oberfläche von Insekten eine gute Benetzung zu erreichen, sind daher stark lipophile Flüssigkeiten wie zum Beispiel flüssiges Paraffin (ca. 25 mJ/m²) oder Silikonöl (22 mJ/m²) erforderlich, weil nur durch diese Eigenschaft eine gute Benetzung der Kleintieroberfläche gewährleistet werden kann.

Wie oben beschrieben, steigt die Benetzungsfähigkeit mit sinkender Kohäsion der Beschichtung. Für eine Optimierung der Benetzungsfähigkeit ist daher eine Reduktion der Kohäsion erforderlich. Der Zusammenhang zwischen Kohäsion und Viskosität ist dem Fachmann bekannt. Erfindungsrelevant ist die Tatsache, dass sinkende Viskosität mit sinkender Kohäsion einhergeht. Für die Optimierung der Benetzungsfähigkeit der Beschichtung ist daher vorteilhaft, die Viskosität der Beschichtung zu minimieren.

An einer lipophilen Beschichtung mit geringer Viskosität bleiben Kleintiere oder Teile deren Körperoberfläche nicht nur haften, sondern durch die gute Benetzung der Körperoberfläche wird das Tier teilweise oder ganz mit einer eng anliegenden Schicht überzogen bzw. taucht teilweise oder ganz in diese Beschichtung ein. Weiters kann solch eine Beschichtung auch zwischen Schuppen, Haare oder Staubpartikel bis zur tatsächlichen Körperoberfläche des Kleintieres dringen, so dass nicht nur diese Strukturen, sondern die tatsächliche Oberfläche des Tiers mit der Beschichtung in Kontakt kommt.

Eine erfindungsgemäße Beschichtung mit niedriger Viskosität und starker Benetzung bietet einem Kleintier beim Versuch, aus eigener Kraft zu entkommen, nur geringen Bewegungswiderstand. Jede Bewegung des Tiers führt zu noch stärkerem Eindringen in die Beschichtung oder zu noch stärkerer Bedeckung der Oberfläche mit der Beschichtung. Die Beschichtung bedeckt daher innerhalb kurzer Zeit einen großen Teil der Körperoberfläche eines gefangenen Tiers. Da durch Befreiungsversuche ein noch innigerer Kontakt mit der Beschichtung hergestellt wird, ist die Bewegungsmöglichkeit des Tieres stark eingeschränkt. Durch das rasche Überziehen der Körperoberfläche mit der Beschichtung bedeckt diese auch den Bereich der Atemöffnungen. Durch ein Eindringen der Beschichtung in die Atemöffnungen werden diese verschlossen, so dass ein rascher Erstickungstod einsetzt. Dies ist auch für die Funktionalität der Erfindung von großer Bedeutung.

Für eine gute Funktionalität einer erfindungsgemäßen Beschichtung soll diese zudem ihre chemischen und physikalischen Eigenschaften im Lauf der Zeit nicht verändern, leicht zu verarbeiten und kostengünstig in der Herstellung sein. Weiters soll sie frei von allen flüchtigen Verbindungen sein, die keine Lockstoffe für die zu fangenden Kleintiere darstellen. Um einen Einsatz außerhalb von Gebäuden zu ermöglichen, soll diese zudem wasserfest und UV-beständig sein und ihre physikalischen Eigenschaften in einem Temperaturbereich von 10°C bis 50°C nicht oder nur unwesentlich ändern. Als besonders geeignete lipophile Komponente der Beschichtung hat sich Paraffin erwiesen, weil es kostengünstig und gegenüber Umwelteinflüssen äußerst stabil ist.

Als Beschichtung kommt erfindungsgemäß daher eine lipophile Flüssigkeit oder ein lipophiles Gel mit einer geringen Viskosität zum Einsatz. Unter "geringer Viskosität" im Sinne der vorliegenden Erfindung ist ein Viskositätswert von weniger als 100 Pa*s zu verstehen, gemessen bei einer Scherrate von etwa 1 s⁻¹, der in einem Temperaturbereich von 10°C bis 30°C nicht überschritten wird. Als besonders vorteilhaft hat sich ein Wert geringer als 70 Pa*s, gemessen bei einer Scherrate von 0.1 bis 1 s⁻¹ und in einem Temperaturbereich von 10°C bis 30°C, erwiesen.

Um ein Abrinnen der Beschichtung von beispielsweise einer Trägeroberfläche zu vermeiden, können der lipophilen Flüssigkeit zur geringfügigen Erhöhung der Viskosität ein oder mehrere Verdickungsmittel zugesetzt werden. Dadurch wird erreicht, dass bei der erfindungsgemäßen Schichtdicke im erfindungsrelevanten Temperaturbereich keine Fließbewegung einsetzt.

Ein noch besseres Ergebnis kann erzielt werden, wenn statt eines oder mehrerer Verdickungsmittel ein oder mehrere Gelbildner zugesetzt werden. In besonderen Ausführungsformen können Gelierungsmittel und Verdickungsmittel auch kombiniert werden.

Unter "geringfügiger Erhöhung der Viskosität" im Sinne der vorliegenden Erfindung ist zu verstehen, dass feste lipophile Verbindungen, Verdickungsmittel oder Gelierungsmittel nur in solch einem Ausmaß zugesetzt werden, damit ein Fließen oder Rinnen der Beschichtung im erfindungsrelevanten Temperaturbereich bei der erfindungsgemäßen Schichtdicke auf einer senkrechten Oberfläche verhindert wird. Die Menge an viskositätserhöhenden Stoffen muss dabei so gewählt sein, dass der erfindungsgemäße Viskositätswert von 100Pa*s bei einer Scherrate von 0,1 bis 1 s⁻¹ in einem Temperaturbereich von 10 bis 30°C nicht überschritten wird.

Unter erfindungsgemäßer Schichtdicke im Sinne der vorliegenden Erfindung ist zu verstehen, dass die Beschichtung auf einem Träger eine maximale mittlere Dicke von 2 mm erreicht. Die tatsächliche Dicke der Beschichtung kann dabei schwanken, insbesondere wenn die Beschichtung manuell aufgetragen wird. An einzelnen Messpunkten kann die Schichtdicke daher bis zu 100% von diesem Mittelwert abweichen, wobei die Schichtdicke aber immer noch als erfindungsgemäß gelten soll. Eine erfindungsgemäße Schichtdicke kann unterhalb von 2 mm beliebig gering sein.

Unter erfindungsrelevantem Temperaturbereich im Sinne der vorliegenden Erfindung ist jener Temperaturbereich zu verstehen, innerhalb dessen die Temperaturen normalerweise liegen, während Kleintiere gefangen werden sollen. Dieser Temperaturbereich ist davon abhängig, in welcher Umgebung die Beschichtung eingesetzt werden soll. In Wohnräumen liegt dieser üblicherweise zwischen 15°C und 25°C, in Lagerräumen kann er zwischen 5°C und 10°C liegen, außerhalb von Gebäuden zwischen 5°C und 70°C. Bei speziellen Anwendungen kann dieser Temperaturbereich auch geringer sein oder über die angegebenen Temperaturen hinausgehen.

Unter Kleintieren im Sinne der vorliegenden Erfindung sind Tiere, deren Körperlänge etwa 3 cm nicht übersteigt, insbesondere Gliedertiere (Arthropoda) zu verstehen. Die Körperlänge bezieht sich dabei auf den Abstand vom Kopfende bis zum Abdominalende der Tiere; Körperanhänge wie Mundwerkzeuge, Fühler, Beine, Legeapparate oder Flügel können zu einer größeren Gesamtlänge von Tieren führen, die dann aber immer noch als Kleintiere im Sinne der vorliegenden Erfindung zu verstehen sind.

Eine erfindungsgemäße Beschichtung besteht vorzugsweise zum größeren Teil, mindestens zu 50%, aus einer oder mehreren flüssigen lipophilen Substanzen mit geringer Viskosität, die also im erfindungsrelevanten Temperaturbereich flüssig sind. Vorzugsweise wird zur geringfügigen Viskositätserhöhung ein kleinerer Teil aus einer oder mehreren festen lipophilen Substanzen zugesetzt. Vorteilhaft ist besonders der Zusatz von einem oder mehreren Verdickungsmitteln zur geringfügigen Viskositätserhöhung. Besonders vorteilhaft ist der Zusatz von Gelbildnern.

Die flüssigen lipophilen Substanzen können natürlicher Herkunft sein, wie zum Beispiel gehärtete oder ungehärtete pflanzliche Öle. Sie können mineralisch sein wie z.B. Mineralöl, oder sie können synthetischer Herkunft sein wie z.B. flüssiges Paraffin, flüssige Vaseline® oder flüssige Silikone. Vorteilhaft ist die Verwendung mineralischer oder synthetischer lipophiler Substanzen, da deren chemische Beschaffenheit weniger leicht durch Reaktion mit Luftsauerstoff oder durch Einwirkung von Mikroorganismen verändert wird.

Besonders vorteilhaft ist die Verwendung von flüssigem Paraffin, weil dieses so gewählt werden kann, dass sich dessen Viskosität im erfindungsrelevanten Temperaturbereich nur geringfügig ändert. Weitere positive Eigenschaften von flüssigem Paraffin im Sinne der vorliegenden Erfindung sind die Abwesenheit flüchtiger Verbindungen und die UV-Stabilität.

Zur geringfügigen Erhöhung der Viskosität ist der Zusatz von festen lipophilen Substanzen oder Verdickungsmitteln vorteilhaft. Die festen lipophilen Substanzen können beispielsweise natürlicher Herkunft sein, wie zum Beispiel Walrat, Bienenwachs, Carnaubawachs, Zuckerrohrwachs oder Ceresin. Sie können auch synthetischer Herkunft sein, wie zum Beispiel wie feste Paraffine, Polyethylenwachse, Polypropylenwachse oder Esterwachse. Vorteilhaft ist der Einsatz von synthetischen Wachsen, da sie zumeist chemisch stabiler und frei von flüchtigen Verbindungen sind. Verdickungsmittel natürlichen Ursprungs sind beispielsweise Polysaccharide wie Alginate, Tragant oder Xanthan.

Besonders vorteilhaft für eine geringfügige Erhöhung der Viskosität ist der Zusatz von Gelbildnern. Ein Gel ist eine feindisperse Mischung einer Flüssigkeit und eines Feststoffes, die sowohl Eigenschaften von Flüssigkeiten als auch von Festkörpern besitzt. Gelbildner existieren in vielfacher Form und sind dem Fachmann bekannt. Natürliche Gelbildner sind beispielsweise Biopolymere wie Agarose, Gelatine oder Pektin. Als halbsynthetische Gelbildner stehen verschiedene Zellulosederivate zur Verfügung. Vorteilhaft ist die Verwendung anorganischer Gelbildner wie Aluminium-Schichtsilikat, Magnesium-Aluminium-Schichtsilikat oder hochdisperses Siliziumdioxid, weil diese für die Gelierung lipophiler Flüssigkeiten besonders gut geeignet sind.

In einer Variante der Erfindung wird die Beschichtung auf einem geeigneten Träger aufgebracht, vorzugsweise hergestellt aus Karton, Kartonpapier oder aus einem Kunststoff wie Polyethylen, Polypropylen, Polystyrol, Polyester oder aus einem Verbundmaterial, zum Beispiel einem Laminat aus Kartonpapier und Polyester. Dieses Trägermaterial kann lichtundurchlässig oder, was bevorzugt ist, lichtdurchlässig sein. Mit "lichtdurchlässig" ist auch der Fall gemeint, dass keine vollständige Absorption bzw. Transmission des Lichts erfolgt, sondern gegebenenfalls nur bestimmte Wellenlängenbereiche absorbiert werden, so dass der Träger farbig und unter Umständen auch dann noch transparent erscheint. Die Verwendung eines farbigen Trägers kann dann vorteilhaft sein, wenn bestimmte Tiere auf derartige optische Signale reagieren, wie dies zum Beispiel bei Hausfliegen, Speisemotten und Wespen der Fall ist. In einer weiteren Ausführungsform ist zu diesem Zweck die Beschichtung gefärbt.

Besonders vorteilhaft ist, wenn durch die Oberflächenbeschaffenheit des Trägers das Abrinnen oder -fließen der Beschichtung verhindert wird. Dadurch wird erreicht, dass die Viskosität der Beschichtung noch geringer sein kann. Das kann zum Beispiel dadurch erreicht werden, dass die Oberfläche nicht glatt sondern rau ausgebildet ist. Methoden zur rauen Gestaltung einer Oberfläche sind dem Fachmann bekannt. Ein Beispiel, auf das die Erfindung aber nicht beschränkt sein soll, besteht in regelmäßigen oder unregelmäßigen Erhöhungen und/oder Vertiefungen, welche kleiner als ein Millimeter sind.

Vorteilhaft ist weiters, wenn durch die räumliche Ausrichtung der beschichteten Oberfläche ein Abrinnen- oder Fließen der Beschichtung reduziert oder verhindert wird. Vorteilhaft sind geneigte Oberflächen, besonders vorteilhaft sind waagrechte Oberflächen.

Ein weiterer Aspekt der vorliegenden Erfindung ist eine Beschichtung, welche Kleintiere nicht nur festhält, sondern diese auch anlockt. Dazu können der Beschichtung Substanzen zugesetzt werden, welche flüchtig sind und attraktiv auf einen Schädling wirken. Solche Substanzen sind dem Fachmann bekannt. Beispiele, auf die die Erfindung aber nicht beschränkt sein soll, sind das Sexualpheromon des Apfelwicklers, E,E-8,10-Dodekadien-12-ol, welches männliche Apfelwickler anlockt, oder 1-Okten-3-ol, das attraktiv auf viele Moskitoarten wirkt.

Die Beschichtung kann aber unter bestimmten Umständen auch auf einer nicht als Träger ausgestalteten Oberfläche aufgebracht werden, beispielsweise direkt am Stamm eines Baumes, um diesen vor nicht-fliegenden Schädlingen wie z.B. Ameisen oder kriechenden Insektenlarven zu schützen.

Die vorliegende Erfindung wird nun anhand der nachfolgenden Beispiele näher erläutert, auf die sie jedoch nicht beschränkt sein soll.

### Zusammensetzung A

Paraffinum liquidum (Neuber's Enkel, Wien) wurde mit weißer pharmazeutischer Vaseline® (Merkur® 774; Fa. Merkur Vaseline GmbH & Co. KG; Erstarrungspunkt 49-54°C) im Gewichtsverhältnis Paraffin: Vaseline® = 2:1 versetzt. Das Gemisch wurde auf einer Heizplatte auf 100°C erhitzt und 5 Minuten mit einem Magnetrührer gerührt. Nach dem Abkühlen auf Raumtemperatur wurde die fertige Beschichtung in PP-Dosen abgefüllt und bei 8°C bis zur Verwendung gelagert.

### Zusammensetzung B

Paraffinum liquidum (Neuber's Enkel, Wien) wurde mit einem Polyethylenwachs (Lubaprint Wachs 496/R, L.P.Bader&Co. GmbH) im Gewichtsverhältnis Paraffin: Wachs = 5:1 versetzt. Das Gemisch wurde auf einer Heizplatte auf 100°C erhitzt und 5 Minuten mit einem Magnetrührer gerührt. Nach dem Abkühlen auf Raumtemperatur wurde die fertige Beschichtung in PP-Dosen abgefüllt und bei 8°C bis zur Verwendung gelagert.

### Zusammensetzung C

Paraffinum liquidum (Neuber's Enkel, Wien) wurde mit einem Polyethylenwachs (Lubaprint Wachs 496/R, L.P.Bader&Co. GmbH) im Gewichtsverhältnis Paraffin : Wachs = 3:1 versetzt. Das Gemisch wurde auf einer Heizplatte auf 100°C erhitzt und 5 Minuten mit einem Magnetrührer gerührt. Nach dem Abkühlen auf Raumtemperatur wurde die fertige Beschichtung in PP-Dosen abgefüllt und bei 8°C bis zur Verwendung gelagert.

### Viskositätsbestimmungen

Zur Viskositätsbestimmung verschiedener Kleintierfallenbeschichtungen wurden auf einem Rheometer (Parr Physica MCR 300) Scherratentests durchgeführt. Getestet wurden die Produkte Tanglefoot® Tangle-trap Insect trap coating (The Tanglefoot company), Soveurode® aerosol (Bio/Technik/Chemie Witasek), Aurum® Insektenleim (W. Neudorff GmbH KG) sowie die erfindungsgemäßen Zusammensetzungen A und B.

Die dynamische Viskosität wurde jeweils bei 10°C, 20°C und 30°C ermittelt. Die Ergebnisse sind in Tabelle 1 (am Ende der Beschreibung) dargestellt. Die Resultate zeigen klar, dass die Viskosität der getesteten am Markt erhältlichen Produkte über den gesamten Temperaturbereich gesehen nicht unter 100 Pa*s liegt. Der besonders vorteilhafte Bereich von weniger als 70 Pa*s wird im Fall des Aurum® Insektenleims erst bei 30°C erreicht. Für eine erfindungsgemäße Verwendung der Beschichtung als Bestandteil einer Kleintierfalle, insbesondere für fliegende Schädlinge, ist eine im Wesentlichen konstante Viskosität in einem Temperaturbereich von 10 bis 30°C unbedingt erforderlich.

Zusammensetzung A und B liegen dagegen bei einer Scherrate von ca. 1 s⁻¹ immer deutlich unterhalb von 30 Pa*s, und bei einer Scherrate von ca. 0,1 s⁻¹ stets unter 100 Pa*s. Die Viskosität der erfindungsgemäßen Beschichtungen ist somit stets deutlich geringer als jene der handelsüblichen Produkte.

### Fangerfolg der Beschichtungen

Zur Bestimmung der Eigenschaft, Kleintiere zu fangen, wurden Versuche in einem 50 x 50 x 200 cm großen Plexiglaskäfig bei 20°C mit männlichen Kastanienminiermotten (*Cameraria ohridella* Deschka & Dimic) durchgeführt. Die Tiere wurden als Puppen aus befallenen Blättern der Rosskastanie (*Aesculus hippocastanum*) gewonnen und im Labor zum Schlüpfen gebracht.

Als Träger für die Beschichtung diente Polypropylenfolie (200x300x0.3 mm). Folgende Beschichtungen wurden getestet: Tanglefoot® Tangle-trap Insect trap coating (The Tanglefoot company), Soveurode® aerosol (Bio/Technik/Chemie Witasek), Aurum® Insektenleim (W. Neudorff GmbH KG), sowie die erfindungsgemäßen Zusammensetzungen A, B und C. Zusätzlich wurde ein Haftkleber auf synthetischer Kautschukbasis (Euromelt 774-21, Henkel AG) getestet, der bei Raumtemperatur fest ist (Herstellerangaben: Erweichungspunkt: 85-95°C, dynamische Viskosität bei 150°C: 3750 ± 750 mPa*s). Dieser Haftkleber wurde bei ca. 150°C verarbeitet. Alle anderen Beschichtungen wurden bei Raumtemperatur manuell auf den Träger aufgetragen. Die Auftragsmenge betrug ca. 30 g/m², entsprechend einer Schichtdicke von weniger als 1 mm.

Für den Test wurde in der Mitte der beschichteten Folie ein Dispenser mit dem weiblichen Sexualpheromon (Bio/Technik/Chemie Witasek) der Kastanienminiermotte angebracht. Die beschichtete und mit Lockstoff versehene Folie wurde an einer Schmalseite des Käfigs angebracht. Danach wurden 20 männliche, adulte Kastanienminiermotten freigelassen. Nach zwei Tagen wurde die Zahl der gefangenen Männchen bestimmt. Zusätzlich wurden jene Flecken gezählt, welche durch verlorene Flügelschuppen entkommener Motten an der Oberfläche der Beschichtung entstanden waren. Eine relative Fangquote wurde ermittelt, indem die Zahl der mit dem Tanglefoot-Produkt gefangenen Motten gleich 1 gesetzt wurde. Die Ergebnisse des Versuchs sind in Tabelle 2 (am Ende der Beschreibung) dargestellt.

Während die hochviskosen Produkte maximal 50% der die Beschichtung berührenden Motten festhalten konnten, lagen alle erfindungsgemäßen Beschichtungen deutlich über 70%. Mit der Zusammensetzung C konnte sogar ein 100%iger Erfolg festgestellt werden.

Im Fall des Aurum® Insektenleims ist der geringe Erfolg bei der Anlockung der Motten (8 von 20 Individuen) sehr wahrscheinlich auf dessen starken Eigengeruch zurückzuführen, der vermutlich eine antagonistische Wirkung zur Attraktivität des Lockstoffes im Dispenser hat. Im Gegensatz hierzu weisen die erfindungsgemäßen Zusammensetzungen keinen Eigengeruch auf.

### Tabelle 1:

Dynamische Viskosität von Kleintierfallenbeschichtungen anhand von Scherratenexperimenten. Für jede Temperatur ist die Viskosität (V) bei jeweils zwei Scherraten (S) innerhalb des Bereiches 0.08 bis 1.2 s⁻¹ dargestellt.

| | **10°C** | | **20°C** | | **30°C** | |
|---|---|---|---|---|---|---|
| **Beschichtung** | S [s⁻¹] | V [Pa*s] | S [s⁻¹] | V [Pa*s] | S [s⁻¹] | V [Pa*s] |
| Tangle-trap Insect trap coating | 0.092 | 596.6 | 0.089 | 392.8 | 0.117 | 478.4 |
| | 0.783 | 503.7 | 0.798 | 216.7 | 1.186 | 121.2 |
| Soveurode® aérosol | 0.092 | 245.8 | 0.086 | 133.6 | 0.084 | 65.5 |
| | 0.964 | 231.4 | 0.964 | 135.3 | 1.112 | 62.2 |
| Aurum® Insektenleim | 0.088 | 254.4 | 0.116 | 184.3 | 0.111 | 275.1 |
| | 1.064 | 166.4 | 1.099 | 73.2 | 1.005 | 44.1 |
| Zusammensetzung A | 0.084 | 94.7 | 0.084 | 36.9 | 0.084 | 6.7 |
| | 0.996 | 22.5 | 1.006 | 3.7 | 1.008 | 0.9 |
| Zusammensetzung B | 0.084 | 3.9 | 0.084 | 1.2 | 0.084 | 0.5 |
| | 1.008 | 2.5 | 1.008 | 0.9 | 1.009 | 0.4 |

### Tabelle 2:

Fangerfolg verschiedener Beschichtungen von Insektenfallen für Falter der Kastanien-Miniermotte (*C. ohridella*). Die absolute Fangrate beschreibt die Zahl der gefangenen Individuen in Relation zur Zahl der freigesetzten Individuen, die relative Fangrate gibt den Anteil der erfolgreich von der Beschichtung festgehaltenen Motten in Prozent von allen auf der Beschichtung gefundenen Mottenspuren an. Der relative Erfolg gibt die Fangleistung relativ zur absoluten Fangrate der Tanglefoot Beschichtung an.

| **Beschichtung** | Anzahl Individuen | | Fangrate | | |
|---|---|---|---|---|---|
| | gefangen | entkommen | absolut | relativ | rel. Erfolg |
| Tanglefoot Beschichtung | 6 | 14 | 30 % | 30% | 1.0 |
| Haftklebstoff | 4 | 15 | 20 % | 21% | 0.7 |
| Aurum® Insektenleim | 4 | 4 | 20 % | 50% | 0.7 |
| Zusammensetzung A | 14 | 5 | 70 % | 74% | 2.3 |
| Zusammensetzung B | 17 | 3 | 85 % | 85% | 2.8 |
| Zusammensetzung C | 20 | 0 | 100 % | 100% | 3.3 |

## Patentansprüche

1. Lipophile Zusammensetzung zur Verwendung als Beschichtung für Kleintierfallen **gekennzeichnet durch** eine dynamische Viskosität, gemessen bei einer Scherrate von 0,1 bis 1 s⁻¹, von weniger als 100 Pa*s über einen Temperaturbereich von 10 bis 30°C.

2. Lipophile Zusammensetzung nach Anspruch 1, **dadurch gekennzeichnet, dass** sie Paraffin als lipophile Komponente beinhaltet.

3. Lipophile Zusammensetzung nach Anspruch 1 oder 2, **dadurch gekennzeichnet, dass** sie zusätzlich zumindest ein Verdickungsmittel enthält.

4. Lipophile Zusammensetzung nach einem der Ansprüche 1 bis 3, **dadurch gekennzeichnet, dass** sie zusätzlich zumindest einen Gelbildner enthält.

5. Lipophile Zusammensetzung nach einem der Ansprüche 1 bis 4, **dadurch gekennzeichnet, dass** sie zusätzlich zumindest einen Lockstoff enthält.

6. Verwendung einer lipophilen Beschichtung in einer Kleintierfalle, **dadurch gekennzeichnet, dass** die Beschichtung eine Zusammensetzung beinhaltet, die eine dynamische Viskosität, gemessen bei einer Scherrate von 0,1 bis 1 s⁻¹, von weniger als 100 Pa*s über einen Temperaturbereich von 10 bis 30°C aufweist.

7. Verwendung nach Anspruch 6, **dadurch gekennzeichnet, dass** die Beschichtung Paraffin als lipophile Komponente beinhaltet.

8. Verwendung nach Anspruch 6 oder 7, **dadurch gekennzeichnet, dass** sie zusätzlich zumindest ein Verdickungsmittel enthält.

9. Verwendung nach einem der Ansprüche 6 bis 8, **dadurch gekennzeichnet, dass** sie zusätzlich zumindest einen Gelbildner enthält.

10. Verwendung nach einem der Ansprüche 6 bis 9, **dadurch gekennzeichnet, dass** sie zusätzlich zumindest einen Lockstoff enthält.

11. Verwendung nach Anspruch 6 zur Bekämpfung von fliegenden Schädlingen, insbesondere aus der Gruppe der Gliedertiere.
